# EUROPEAN PATENT APPLICATION

(11) **EP 1 046 851 A2**
(43) Date of publication of application: **25.10.2000**
(21) Application number: 99830370.5
(22) Date of filing: 15.06.1999
(51) Int. Cl.: F16L 25/00, F16L 11/15

(54) **Flexible tube for waste water in plumbing systems**

(30) Priority: 20.04.1999 IT BS990032 U
(71) Applicant: Eureka Immobiliare S.r.l., 25066 Lumezzane (Brescia) (IT)
(72) Inventor: Bonomini, Constantino, 25066 Lumezzane (Brescia) (IT)
(74) Representative: Manzoni, Alessandro

(57) **Abstract**

The invention concerns a flexible tube in plastic material with a uniformly corrugated or ribbed wall, equipped with male and/or female end fittings, and intended for use in plumbing systems. Each end fitting (12,13) is fixed and held fast to the respective end of the said tube by means of a fastening ring (16,18) in plastic material, overprinted and tightly enclosing the adjacent sections of the tube and fitting.

## Description

This invention regards a flexible ribbed tube for use in plumbing systems.

At present, the state of the art is represented by flexible tubes in plastic material that are uniformly corrugated or ribbed, both externally and internally. These may be bent in various ways according to fitting requirements, and, to date, have been used almost exclusively for passing electrical wiring and similar, rather than fluids. However, these tubes have not been used for waste water in plumbing systems because the ribbed internal surface favours the deposition of mud and impurities in the hollow spaces.

Flexible tubes with a double wall have already been presented, for example in DE-39 06 752 and in EP-O 410 339, that is, tubes with a uniform corrugated external wall and an internal lining that makes the internal surface substantially smooth and continuous, closing off the internal hollow spaces.

These double-walled tubes could be used in plumbing systems. However, this use would mean each tube being equipped with male and female end fittings for coupling tubes together or joining them to other typical equipment of the above-mentioned plumbing systems.

In previous models, such as those in patents DE-4128057 and DE-4232199, there was the proposal to apply end fittings in a plastic material to the flexible ribbed tube by means of welding. To ensure the best results in welding, the material of the flexible tube and the fittings should be the same or at least compatible. However, the material of the fittings need not be compatible with that of the tubes or the equipment normally used in plumbing systems, and to which the fittings have to be joined by welding or fastening before use.

Patent EP-O 271 598 proposed the application of end fittings to a double-walled flexible tube by means of overprinting. In this way, each fitting is overprinted on the end part of the ribbed tube, as an extension of said tube and in such a way that it remains fastened to the external grooves of the tube, thanks also to the fact that these are now crushed and deformed. In this case, too, though, the material used for the end fittings must be the same as, or compatible with, that of the tube, for which reason the finished tube is subject to similar limitations to those of the ribbed tubes with welded end fittings.

Furthermore, both welding and overprinting of end fittings on ribbed tubes of the type mentioned above are difficult operations to carry out because the walls of the said tubes are generally very thin, which makes it difficult to ensure a firm and reliable fit between walls.

Considering all these factors, the aim of this invention is to overcome these disadvantages and weaknesses, proposing flexible ribbed tubes, including those of the double-walled variety, that can be profitably used in plumbing systems in particular, but not only, to carry the waste water from such systems and also in repair work on tubing already installed.

Another aim of this invention is to propose a new and original way to couple and join male and female end fittings to a ribbed tube without resorting to welding or direct overprinting onto the tube.

Another aim of this invention is to ensure a safe, strong and reliable connection between the end fittings and the ribbed tube, including the double-walled variety, irrespectively of the width of the tube walls and the material from which the tube is made.

A further aim of the invention is to supply a flexible ribbed tube with male and/or female end fittings that may be in any plastic material, or even metal, according to need.

These aims are realised in accordance with the flexible tube invention described in revendication 1.

The enclosed drawings show approximate examples of the proposed flexible ribbed tube with end fittings added. In these designs:
Fig. 1 shows a length-wise section of part of a ribbed tube with fittings in the first stages of assembly; and
Fig. 2 shows a similar view to that in Fig. 1, but the tube and its applied fittings have been assembled in another form.

In both figures, the flexible ribbed tube is indicated by 11 and the end fittings by 12 and 13, respectively.

The structure of the tube 11 itself is already well-known and does not need a particular description here. All that need be noted is that, internally, the tube has a wall or lining 11' with the function of closing off the hollow spaces in the grooves which open towards the inner part of the tube.

The end fittings 12 and 13 may be, as shown in the drawings, a male and female. However, according to need, they may both be male or both female. Furthermore, said fittings may be in any plastic material, or even in metal.

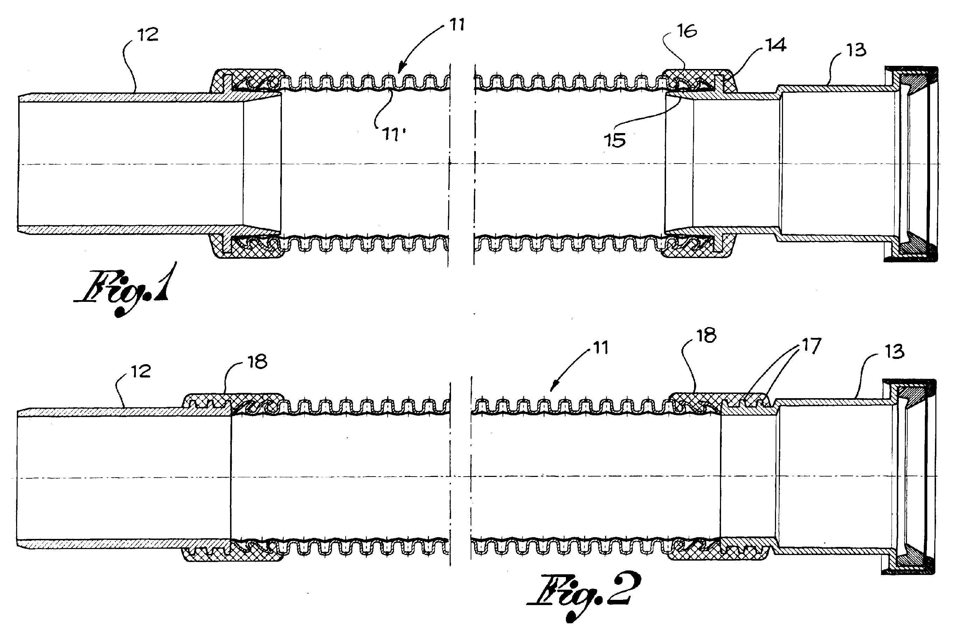

In the example shown in Fig. 1, each fitting 12, 13 has at least an external collar 14 and an axial section 15 that protrudes beyond the external collar. Each fitting is previously coupled to the tube 11, inserting the axial section 15 into the respective end of the tube, up to the point where the external collar 14 rests against said end. Each fitting is then fastened to the tube by overprinting a ring 16, in a plastic material, around both the tube and the fitting, in such a way as to tighten it and hold it to the external ribs on the tube and the external collar, thereby effectively destroying them. The part 15 inserted into the tube has the advantage of strengthening the wall of the latter, which is often very thin, and helps prevent excessive deformation when the fastening ring is overprinted.

In the example shown in Fig. 2, both fittings 12,13 have several external collars 17, alternating with the grooves. In this case, each fitting is simply brought up to and aligned with its respective end of the tube 11. Then each fitting is fastened to the tube by means of overprinting a ring 18 in plastic material which tightens around and fastens to the ribs at the end of the tube and the external collars 17 of the fitting.

In the example in Fig. 1, the fittings have a smaller diameter than the internal diameter of the tube; in Fig. 2, the internal diameters of the tube and fittings may be the same. However, even when the fittings have an axial section to be inserted into the tube, the tube and the fittings may still have internal diameters that are practically the same, it just requires the tube ends to be stretched before adding the fittings.

In any case, the external parts of the tube and the fittings are crushed when the ring is overprinted for the coupling, not only because of the tight physical combination with the material of the ring, but also for the mechanical necessity to fasten and hold fast the components, without the risk of them coming undone longitudinally.

As an example, independently of the material used for the tube, the end fittings may be in PVC or ABS, when the final product is intended for coupling with tubes in PVC (by gluing) or with any other tube, in PEHD or in PP for applications which do not foresee coupling with chemical agents such as solvents, ketones, glues etc., or in metal for connections with metallic tubes. As far as the fastening ring is concerned, this will be in a material compatible with that of the ribbed tube.

## Claims

1. Flexible tube in plastic material with at least one wall with ring grooves, corrugated or ribbed uniformly, equipped with a male and/or female end fitting, and intended especially for use in plumbing systems, characterised by the fact that each end fitting (12,13) is fixed and held fast to the respective end of said tube by means of a fastening ring (16,18) in plastic material, which is printed over and tightly binding on the adjacent sections of the tube and fitting.

2. Flexible tube according to revendication 1, in which said fastening ring (16,18) crushes several external grooves of the ribbed tube and at least one external collar around the end fitting, impeding any axial or rotational movement of the fitting with respect to the tube.

3. Flexible tube according to revendication 2, in which said fastening ring (16,18) is in the same plastic material or a different material from that of the ribbed tube.

4. Flexible tube according to revendications 1-3, in which each fitting (12,13) has at least one external ring collar (14) and an axial section that extends beyond said collar, and where said axial portion is lodged within the respective end of the end of the ribbed tube and said ring collar rests against said end of said tube before overprinting with the fastening ring (16).

5. Flexible tube according to revendication 4, in which said axial section (15) of the fitting is lodged in the end section of the ribbed tube, having an internal diameter equal to that of the rest of the tube.

6. Flexible tube according to revendiation 4, in which said axial section (15) of the fitting is lodged in the end part of the ribbed tube, having an internal diameter greater than that of the internal diameter of the rest of the tube, the end part of the tube being widened beforehand.

7. Flexible tube according to revendications 1-3, in which each fitting (12,13) has several external collar rings (17), and where said fitting is brought up to and aligned with the respective end of the ribbed tube, before overprinting with the fastening ring (18).

8. Flexible tube according to revendication 7, in which the ribbed tube and the fitting have the same diameter.

9. Flexible tube according to any of the above revendications, in which said fittings (12,13) are of the same form or different.

10. Flexible tube according to any of the above revendications, in which said fittings (12,13) are in a plastic material, or in metal.
